# EUROPÄISCHE PATENTSCHRIFT

(11) **EP 0 955 212 B1**
(45) Veröffentlichungstag und Bekanntmachung des Hinweises auf die Patenterteilung: **06.10.2004**
(21) Anmeldenummer: 99105182.2
(22) Anmeldetag: 31.03.1999
(51) Int. Cl.: B60R 21/16, B60R 21/20

(54) **Gassack-Modul**
Air bag module
Module de sac de sécurité gonflable

(30) Priorität: 07.04.1998 DE 29806402 U
(43) Veröffentlichungstag der Anmeldung: 10.11.1999
(73) Patentinhaber: TRW Automotive GmbH, 73553 Alfdorf (DE)
(72) Erfinder: Dannenhauer, Reiner, 73642 Welzheim (DE); Debler, Jens, 73525 Herlikofen (DE); Lutz, Joachim, 73579 Schechingen (DE)
(74) Vertreter: Degwert, Hartmut, Dipl.-Phys.

(56) Entgegenhaltungen:
- EP-A- 0 633 168
- EP-A- 0 829 397

## Beschreibung

Die Erfindung betrifft einen Gassack-Modul für ein Insassen-Rückhaltesystem in Fahrzeugen nach dem Oberbegriff des Anspruchs 1, mit einem allgemein wannenförmigen Gehäuse und einem mit einem Einsatzteil in das Gehäuse eingesetzten gefalteten Gassack sowie mit einem rohrförmigen Gasgenerator, der durch eine Öffnung in einer Stirnwand des Gehäuses in dieses eingeschoben ist, wobei
das Einsatzteil mit einem angeformten Führungsblech versehen ist, das sich im wesentlichen parallel zu den Innenflächen des Gehäuses in geringem Abstand von diesen erstreckt,
das Einsatzteil gegenüber der Öffnung in der Stirnwand des Gehäuses eine entsprechende Öffnung für den Durchgang des Gasgenerators aufweist und
der Gasgenerator aus der Öffnung in der Stirnwand des Gehäuses nach außen herausragt.

Ein solches Gassack - Modul ist aus der EP0829397 A bekannt.

Ein Gassack-Modul dieser Bauform ist besonders für die Beifahrerseite in Fahrzeugen geeignet. Unter den zahlreichen bekannten Bauformen von Gassack-Modulen hat die mit einem allgemein wannenförmigen Gehäuse und einem darin eingesetzten Einsatzteil, über das der Gassack an das Gehäuse angebunden ist, den Vorzug einer geringen Anzahl von Einzelteilen und einer vereinfachten Montage. Der Modul kann komplett angeliefert und im Fahrzeug eingebaut werden.

Die Befestigung des Gasgenerators am Gehäuse eines solchen Gassack-Moduls erfordert wegen der großen Beanspruchungen bei seiner Aktivierung einen erheblichen Aufwand.

Durch die Erfindung wird ein Gassack-Modul der angegebenen Bauform weiter vereinfacht, insbesondere hinsichtlich der Befestigung des Gasgenerators am Gehäuse.

Gemäß der Erfindung ist vorgesehen, daß:
a) das Gehäuse innenseitig mit Auflageflächen für das Einsatzteil versehen ist;
b) das Einsatzteil angeformte Randstreifen aufweist, die von der Berandung der Einblasöffnung des Gassacks umgeben sind;
c) das Einsatzteil an seinen Randstreifen gegen die Auflageflächen des Gehäuses verspannt ist.

Vorzugsweise ist der Gasgenerator zwischen dem Rand der Öffnung in der Stirnwand des Gehäuses und dem Rand der entsprechenden Öffnung des Einsatzteils eingeklemmt.

Der Gasgenerator ist somit ohne gesonderte Befestigungselemente am Gehäuse festgelegt. Die Einklemmung des rohrförmigen Gasgenerators zwischen den Rändern der Öffnungen im Gehäuse und im Einsatzteil wirkt zunächst radial, aufgrund der Reibung aber auch axial. Dennoch kann zur axialen Sicherung des Gasgenerators eine Verschraubung vorgesehen sein, insbesondere eine Schraube, die in eine Stirnfläche des Gasgenerators eindringt und ihn in Axialrichtung im Gehäuse festlegt.

Bei der bevorzugten Ausführungsform ragt der Gasgenerator an seinen beiden Enden aus dem Gehäuse heraus. Ferner ist der Gassack mit einem aufgesetzten Befestigungslappen versehen, der das Führungsblech des Einsatzteils umgibt. Bei der Expansion des Gassacks dient der Gasgenerator dann als Zuganker, der das Einsatzteil und über dieses den Gassack am Gehäuse sichert.

Bei der besonders vorteilhaften Ausführungsform nimmt der gefaltete Gassack den Raum des Gehäuses ein, der zwischen seinen Auflageflächen und dem von diesen abgewandten umlaufenden Rand des Gehäuses begrenzt ist. Der gefaltete Gassack ist somit vollständig im Inneren des Gehäuses aufgenommen.

Da durch den als Zuganker wirkenden rohrförmigen Gasgenerator die bei dessen Aktivierung auftretenden Beanspruchungen in günstiger Weise auf das Gehäuse übergeleitet werden, ist es möglich, dieses Gehäuse aus faserverstärktem Kunststoff herzustellen.

Weitere Vorteile und Merkmale der Erfindung ergeben sich aus der folgenden Beschreibung einer bevorzugten Ausführungsform unter Bezugnahme auf die Zeichnung. In der Zeichnung zeigen:

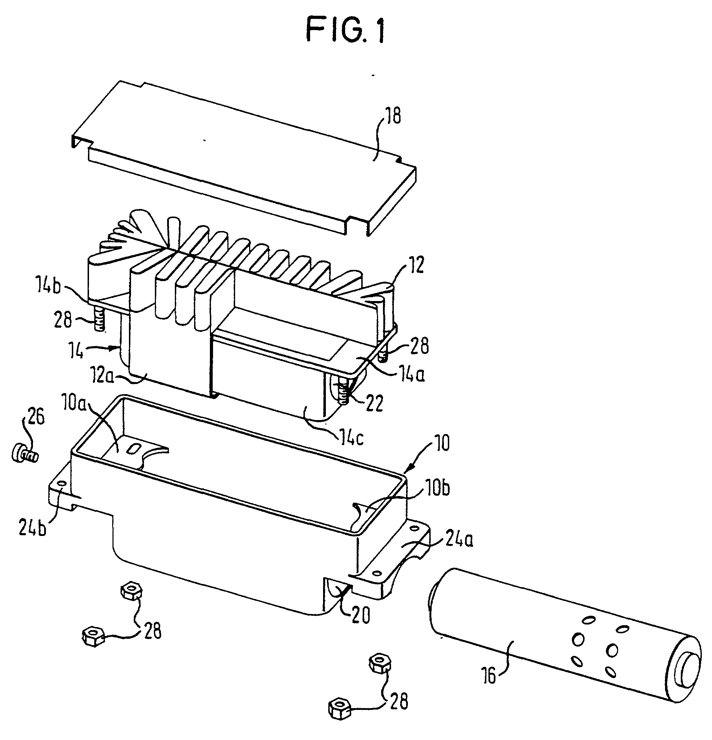

Figur 1 eine teilweise geschnittene Explosionsansicht des Gassack-Moduls;

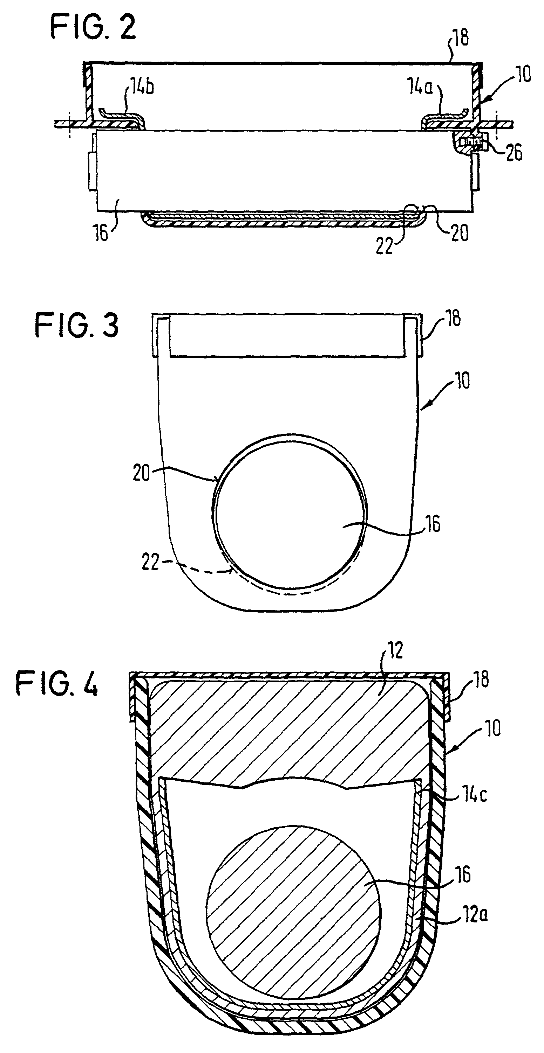

Figur 2 einen schematischen Längsschnitt durch das Gehäuse des Gassack-Moduls;
Figur 3 eine schematische Stirnansicht des Gassack-Moduls; und
Figur 4 eine schematische Querschnittsansicht des Gassack-Moduls.

Das Gassack-Modul besteht aus einem allgemein wannenförmigen Gehäuse 10, einem gefalteten Gassack 12, einem Einsatzteil 14, einem rohrförmigen Gasgenerator 16 und einem auf den oberen Rand des Gehäuses 10 aufgesetzten Deckel 18. Das Einsatzteil 14 ist mit angeformten Randstreifen 14a, 14b versehen, die von der Berandung der Einblasöffnung des Gassacks 12 umgeben sind. Ferner ist das Einsatzteil 14 mit einem angeformten Führungsblech 14c versehen, dessen Form dergestalt ist, daß nach dem Einsetzen des Einsatzteils 14 in das Gehäuse 10 dieses Führungsblech 14c zumindest annähernd parallel zur Innenfläche des Gehäuses ist und von diesem einen geringen Abstand einhält. Das Gehäuse 10 ist innenseitig mit Auflageflächen 10a, 10b für die Randstreifen 14a, 14b des Einsatzes 14 ausgestattet. Ein auf den Gassack 12 aufgesetzter, streifenförmiger Befestigungslappen 12a umgibt das Führungsblech 14c und befindet sich im eingebauten Zustand zwischen diesem und der Innenseite des Gehäuses 10.

Auf seinen einander gegenüberliegenden Stirnseiten ist das Gehäuse 10 mit Durchgangsöffnungen 20 für den Gasgenerator 16 versehen. Entsprechende Durchgangsöffnungen 22 sind auf den Stirnseiten des Einsatzteils 14 angeordnet. Der durch die Öffnungen 20 und 22 eingeschobene Gasgenerator 16 ragt an seinen beiden Enden aus dem Gehäuse 10 heraus.

Das Gehäuse 10 ist auf seinen Stirnseiten mit zwei angeformten Montageflanschen 24a, 24b versehen. In eine der Stirnflächen des Gasgenerators 16 dringt eine Schraube 26 ein, die den Gasgenerator 16 in Axialrichtung am Gehäuse 10 sichert. Die Montageflansche 24a, 24b können alternativ oder zusätzlich an den Längsseiten des Gehäuses 10 vorgesehen sein.

Nachdem der Einsatz 14 mit dem darauf gefalteten Gassack 12 in das Gehäuse 10 eingesetzt ist, wird der Gasgenerator 16 durch die Öffnungen 20, 22 eingeschoben. Mittels Schraubbolzen 28, die durch entsprechende Öffnungen in den Auflageflächen 10a, 10b des Gehäuses 10 greifen, und entsprechenden Schraubmuttern 28a wird dann der Einsatz 14 gegen das Gehäuse 10 verspannt. Bei diesem Vorgang greifen die Ränder der Öffnungen 20, 22 am Außenumfang des Gasgenerators 16 an, so daß dieser eingeklemmt wird. Der Gasgenerator 16 ist somit nach Verspannen des Einsatzteils 14 gegen das Gehäuse 10 ohne weitere Befestigungsmittel an diesem festgelegt. Durch Reibung wirkt die Klemmeinspannung des Gasgenerators 16 auch in dessen Axialrichtung.

Der Raum im Inneren des Gehäuses 10 zwischen den Auflageflächen 10a, 10b und dem davon abgewandten umlaufenden Rand des Gehäuses 10 wird von dem gefalteten Gassack 12 eingenommen. Der gefaltete Gassack 12 wird durch den auf den umlaufenden Rand des Gehäuses 10 aufgesetzten Deckel 18 geschützt und im zusammengefalteten Zustand gehalten. Wenn der gefaltete Gassack über den Rand des Gehäuses hinausragt, ist eine entsprechend überhöhte Ausführung des Deckels 18 zu verwenden.

Das bevorzugte Material für das Gehäuse 10 ist glasfaserverstärktes Polyamid. Auch Leichtmetalldruckguß oder eine Stahlblechkonstruktion ist möglich. Das Einsatzteil 14 mit dem angeformten Führungsblech 14c besteht hingegen aus Metall, da es hohen thermischen Beanspruchungen ausgesetzt ist. Der Deckel 18 kann wiederum aus Kunststoff bestehen, vorzugsweise Polyethylen.

Bei der Aktivierung des Gasgenerators 16 wird der Gassack 12 entfaltet und aufgeblasen. Durch den Dehnungsdruck des Gassacks wird eine hohe Zugbeanspruchung auf den Befestigungslappen 12a und über diesen auf das Führungsblech 14a ausgeübt. Diese Beanspruchungen werden von dem Einsatzteil 14 auf das Gehäuse des Gasgenerators 16 übertragen und letztlich in den Öffnungen 20 des Gehäuses 10 abgestützt. Es ist somit ersichtlich, daß das Gehäuse des Gasgenerators 16 als Zuganker wirkt.

## Patentansprüche

1. Gassack-Modul für ein Insassen-Rückhaltesystem in Fahrzeugen, mit einem allgemein wannenförmigen Gehäuse (10) und einem mit einem Einsatzteil (14) in das Gehäuse eingesetzten gefalteten Gassack (12) sowie mit einem rohrförmigen Gasgenerator (16), der durch eine Öffnung (20) in einer Stirnwand des Gehäuses in dieses eingeschoben ist, wobei
das Einsatzteil (14) mit einem angeformten Führungsblech (14c) versehen ist, das sich im wesentlichen parallel zu den Innenflächen des Gehäuses (10) in geringem Abstand von diesem erstreckt;
das Einsatzteil (14) gegenüber der Öffnung (20) in der Stirnwand des Gehäuses (10) eine entsprechende Öffnung (22) für den Durchgang des Gasgenerators (16) aufweist; und
der Gasgenerator (16) aus der Öffnung (20) in der Stirnwand des Gehäuses (10) nach außen herausragt;
das Gehäuse (10) innenseitig mit Auflageflächen (10a, 10b) für das Einsatzteil (14) versehen ist;
das Einsatzteil (14) angeformte Randstreifen (14a, 14b) aufweist, die von der Berandung der Einblasöffnung des Gassacks (12) umgeben sind; und
das Einsatzteil (14) an seinen Randstreifen (14a, 14b) gegen die Auflageflächen (10a, 10b) des Gehäuses (10) verspannt ist.

2. Gassack-Modul nach Anspruch 1, **dadurch gekennzeichnet, daß** der Gasgenerator (16) zwischen dem Rand der Öffnung (20) in der Stirnwand des Gehäuses (10) und dem Rand der entsprechenden Öffnung (22) des Einsatzteils (14) eingeklemmt ist.

3. Gassack-Modul nach Anspruch 1, **dadurch gekennzeichnet, daß** in beiden einander gegenüberliegenden Stirnwänden des Gehäuses (10) und den entsprechenden Wandungsteilen des Einsatzteils (14) Öffnungen (20, 22) für den Durchgang des Gasgenerators (16) vorgesehen sind, der an beiden Enden aus dem Gehäuse (10) herausragt und an beiden Enden zwischen den Rändern der Öffnungen (20, 22) eingeklemmt ist.

4. Gassack-Modul nach Anspruch 1, 2 oder 3, **dadurch gekennzeichnet, daß** der Gasgenerator (16) durch wenigstens eine in eine seiner Stirnflächen eindringende Schraube (26) axial am Gehäuse (10) festgelegt ist.

5. Gassack-Modul nach einem der vorstehenden Ansprüche, **dadurch gekennzeichnet, daß** der Gassack (12) einen aufgesetzten Befestigungslappen (12a) aufweist, der das Führungsblech (14c) des Einsatzteils (14) umgibt.

6. Gassack-Modul nach einem der vorstehenden Ansprüche, **dadurch gekennzeichnet, daß** an den beiden Stirnflächen des Gehäuses (10) Montageflansche (24a, 24b) angeformt sind, die in Axialrichtung des Gasgenerators (16) über diesen hinausragen.

7. Gassack-Modul nach einem der vorstehenden Ansprüche, **dadurch gekennzeichnet, daß** der gefaltete Gassack (12) den Raum des Gehäuses (10) einnimmt, der zwischen seinen Auflageflächen (10a, 10b) und dem von diesen abgewandten umlaufenden Rand des Gehäuses (10) begrenzt ist.

8. Gassack-Modul nach Anspruch 7, **dadurch gekennzeichnet, daß** auf den umlaufenden Rand des Gehäuses (10) ein Deckel (18) aufgesetzt ist.

9. Gassack-Modul nach einem der vorstehenden Ansprüche, **dadurch gekennzeichnet, daß** das Gehäuse (10) aus faserverstärktem Kunststoff besteht.

10. Gassack-Modul nach einem der vorstehenden Ansprüche, **dadurch gekennzeichnet, daß** der rohrförmige Gasgenerator (16) durch formschlüssige Mittel am Gehäuse (10) gegen Verdrehen um seine Achse gesichert ist.

## Claims

1. A gas bag module for an occupant restraint system in a vehicle, comprising a generally trough-shaped housing (10) and a folded gas bag (12) inserted in the housing with an insert (14), and further comprising a tubular inflator (16) which is inserted in the housing through an opening (20) in a face wall of the housing,
the insert (14) being provided with an integrally formed guide plate (14c) extending substantially parallel to the inner surfaces of the housing (10) and slightly spaced away therefrom;
the insert (14) including, opposite the opening (20) in the face wall of the housing (10), a corresponding opening (22) for the passage of the inflator (16); and
the inflator (16) protruding outwards from the opening (20) in the face wall of the housing (10);
**characterized in that**:
the housing (10) is provided on the inside with supporting surfaces (10a, 10b) for the insert ( 14);
the insert (14) has integrally formed edge strips (14a, 14b) surrounded by the rim of the inflation opening of the gas bag (12); and
the insert (14) is braced at its edge strips (14a, 14b) against the supporting surfaces (10a, 10b) of the housing (10).

2. The gas bag module as set forth in claim 1, **characterized in that** the inflator (16) is clamped in place between the rim of the opening (20) in the face wall of the housing (10) and the rim of the corresponding opening (22) of the insert (14).

3. The gas bag module as set forth in claim 1, **characterized in that** openings (20, 22) for the passage of the inflator (16) are provided in both face walls, located opposite each other, of the housing (10) and in the corresponding wall parts of the insert (14), the inflator (16) projecting from the housing (10) at both ends and being clamped in place at both ends between the rims of the openings (20, 22).

4. The gas bag module as set forth in claim 1, 2 or 3, **characterized in that** the inflator (16) is axially fixed in place at the housing (10) by at least one screw (26) penetrating into one of the end faces of the inflator.

5. The gas bag module as set forth in any of the preceding claims, **characterized in that** the gas bag (12) includes a fastening tab (12a) placed thereon, which surrounds the guide plate (14c) of the insert (14).

6. The gas bag module as set forth in any of the preceding claims, **characterized in that** mounting flanges (24a, 24b) are formed integrally with the two end faces of the housing (10) and protrude beyond the inflator (16) in the axial direction of the inflator (16).

7. The gas bag module as set forth in any of the preceding claims, **characterized in that** the folded gas bag (12) takes up the space of the housing (10) defined between its supporting surfaces (10a, 10b) and the surrounding rim of the housing (10) facing away from the supporting surfaces.

8. The gas bag module as set forth in claim 7, **characterized in that** a cover (18) is placed on the surrounding rim of the housing (10).

9. The gas bag module as set forth in any of the preceding claims, **characterized in that** the housing (10) is made of a fiber-reinforced plastic material.

10. The gas bag module as set forth in any of the preceding claims, **characterized in that** the tubular inflator (16) is locked against rotation about its axis by interlocking means on the housing (10).

## Revendications

1. Module de coussin à gaz pour un système de retenue de passager dans des véhicules, comportant un boîtier (10) en forme générale de cuve et un coussin à gaz (12) plié et mis en place dans le boîtier avec une pièce d'insert (14), ainsi qu'un générateur de gaz (16) de forme tubulaire qui est introduit dans le boîtier à travers une ouverture (20) ménagée dans la paroi frontale de celui-ci,
la pièce d'insert (14) étant pourvue d'une tôle de guidage (14c) façonnée, qui s'étend sensiblement parallèlement aux surfaces intérieures du boîtier (10), à faible distance de celui-ci ;
la pièce d'insert (14) présentant à l'opposé de l'ouverture (20) dans la paroi frontale du boîtier (10) une ouverture (22) correspondante pour le passage du générateur de gaz (16 ; et
le générateur de gaz (16) faisant saillie vers l'extérieur hors de l'ouverture (20) dans la paroi frontale du boîtier (10) ;
**caractérisé en ce que**
le boîtier (10) est pourvu sur la surface intérieure de surfaces d'appui (10a, 10b) pour la pièce d'insert (14) ;
la pièce d'insert (14) présente des bandes de bordure (14a, 14b) façonnées qui sont entourées par le bord de l'ouverture de soufflage du coussin à gaz (12) ; et
la pièce d'insert (14) est serrée sur ses bandes de bordure (14a, 14b) contre les surfaces d'appui (10a, 10b) du boîtier (10).

2. Module de coussin à gaz selon la revendication 1, **caractérisé en ce que** le générateur de gaz (16) est serré entre le bord de l'ouverture (20) dans la paroi frontale du boîtier (10) et le bord de l'ouverture (22) correspondante de la partie d'insert (14).

3. Module de coussin à gaz selon la revendication 1, **caractérisé en ce que** dans les deux parois frontales opposées l'une à l'autre du boîtier (10) et les parties de parois correspondantes de la partie d'insert (14) sont prévues des ouvertures (20, 22) pour le passage du générateur de gaz (16) qui fait saillie aux deux extrémités hors du boîtier (10) et qui est serré aux deux extrémités entre les bords des ouvertures (20, 22).

4. Module de coussin à gaz selon la revendication 1, 2 ou 3, **caractérisé en ce que** le générateur de gaz (17) est immobilisé axialement sur le boîtier (10) par au moins une vis pénétrant dans une de ses surfaces frontales.

5. Module de coussin à gaz selon l'une des revendications précédentes, **caractérisé en ce que** le coussin à gaz (12) présente une patte de fixation (12a) rapportée qui entoure la tôle de guidage (14c) de la partie d'insert (14).

6. Module de coussin à gaz selon l'une des revendications précédentes, **caractérisé en ce que** sur les deux faces frontales du boîtier (10) sont façonnées des brides de montage (24a, 24b) qui font saillie au-delà du générateur de gaz (16) en direction axiale de celui-ci.

7. Module de coussin à gaz selon l'une des revendications précédentes, **caractérisé en ce que** le coussin à gaz (12) plié occupe l'espace du boîtier (10) qui est délimité entre ses surfaces d'appui (10a, 10b) et le bord périphérique du boîtier (10), qui est détourné de celles-ci.

8. Module de coussin à gaz selon la revendication 7, **caractérisé en ce qu'**un couvercle (18) est posé sur le bord périphérique du boîtier (10).

9. Module de coussin à gaz selon l'une des revendications précédentes, **caractérisé en ce que** le boîtier (10) est en matière plastique renforcée par des fibres.

10. Module de coussin à gaz selon l'une des revendications précédentes, **caractérisé en ce que** le générateur de gaz (16) de forme tubulaire est assuré contre la rotation autour de son axe par des moyens coopérant par leurs formes sur le boîtier (10).
